# FASCICULE DE BREVET EUROPEEN

(11) **EP 3 759 518 B1**
(45) Date de publication et mention de la délivrance du brevet: **11.10.2023**
(21) Numéro de dépôt: 19719560.5
(22) Date de dépôt: 28.03.2019
(51) Int. Cl.: G01S 17/10, G01S 7/487

(54) **PROCÉDÉ ET SYSTÈME D'ÉMISSION ET DE RÉCEPTION D'IMPULSIONS LASER**
VERFAHREN UND SYSTEM ZUM AUSSENDEN UND EMPFANGEN VON LASERIMPULSEN
METHOD AND SYSTEM FOR EMITTING AND RECEIVING LASER PULSES

(30) Priorité: 03.04.2018 FR 1800272
(43) Date de publication de la demande: 06.01.2021
(73) Titulaire: ArianeGroup SAS, 78130 Les Mureaux (FR)
(72) Inventeur: JACOBE DE NAUROIS, Guy-Maël, 78131 Les Mureaux Cedex (FR); PARRAIN, David, 78131 Les Mureaux Cedex (FR); ESMILLER, Bruno, 78670 Villennes sur Seine (FR)
(74) Mandataire: Brevalex
(86) Numéro de dépôt international: PCT/FR2019/050719
(87) Numéro de publication internationale: WO 2019/193269

(56) Documents cités:
- EP-A2- 2 157 445
- US-A1- 2012 257 186
- US-A1- 2016 327 646

## Description

### DOMAINE TECHNIQUE

La présente invention concerne un procédé et un système d'émission et de réception d'impulsions laser.

### ETAT DE LA TECHNIQUE

Bien que non exclusivement, un système d'émission et de réception d'impulsions laser, tel que considéré, peut faire partie d'un télémètre laser à haute fréquence qui est notamment destiné à être utilisé dans diverses applications dans le domaine spatial.

Un tel télémètre laser peut, en particulier, être utilisé pour mettre en oeuvre une trajectographie laser ou télémétrie laser sur satellite de type SLR (pour « Satellite Laser Ranging » en anglais). La multiplication des débris en orbite et l'évolution des menaces motivent le développement de moyens optiques, notamment actifs de type trajectographie laser, pour connaître de façon très précise les orbites d'objets spatiaux (satellites, débris).

Par ailleurs, une autre application possible d'un système d'émission et de réception d'impulsions laser, à haute fréquence, est de réaliser une liaison laser de communication entre une station sol et un drone (ou un objet ou engin en orbite) en utilisant une technologie de rétro-réflecteurs modulés. Pour ce faire, on prévoit, dans la station sol, le système laser destiné à émettre un faisceau laser pour illuminer un rétro-réflecteur monté sur le drone (ou sur l'objet ou l'engin en orbite). Ce rétro-réflecteur est conçu pour moduler l'intensité réfléchie. Il est construit (sous forme d'un coin de cube ou d'un réflecteur sphérique par exemple) de sorte que le faisceau laser soit réfléchi exactement dans la même direction que celle du faisceau laser reçu. La modulation est détectée et traitée par le système au sol.

D'autres applications sont également possibles pour un tel système d'émission et de réception d'impulsions laser.

Pour ces applications, en émettant des impulsions laser à basse énergie (inférieure à 1 mJ), qui est limitée pour des raisons de sécurité, la difficulté est de pouvoir traiter les signaux, en raison de rapports entre les signaux de retour et les bruits, qui sont extrêmement faibles.

De façon usuelle, on émet des impulsions uniques de moyennes énergies (supérieures à 0,1 mJ). Toutefois, si l'on tente d'augmenter la cadence de tir, la résolution spatiale de la mesure est dégradée, voire impossible si l'on tire continuellement à haute fréquence (plus vite que le temps aller/retour des impulsions).

La demande de brevet EP 2 157 445 A2 décrit un système LIDAR permettant de déterminer la distance d'un objet par rapport à un dispositif d'émission/réception d'impulsions lumineuses. Le procédé divulgué par ce document consiste à émettre une séquence de plusieurs impulsions dites transmises, les durées entre deux impulsions successives étant pseudo-aléatoires. Une séquence d'impulsions réfléchies par l'objet est ensuite reçue et analysée. À cet effet, la séquence d'impulsions réfléchies est corrélée à une fonction représentant la séquence d'impulsions transmises. Le résultat permet de déterminer si la séquence d'impulsions réfléchies correspond à la séquence d'impulsions transmises et, le cas échéant, la distance séparant le dispositif d'émission/réception de l'objet.

La demande de brevet US 2012/257186 A1 décrit un procédé de mesure de distances par émission d'une série d'impulsions laser séparées par un intervalle variable généré par un signal de modulation, de préférence aléatoire. Les impulsions reçues sont appariées avec les impulsions émises en considérant différentes fenêtres temporelles correspondant à différentes plages de distances.

La demande de brevet US 2016/327646 A1 décrit un lidar comportant une matrice de lasers et une lentille permettant de fournir une image tridimensionnelle de la scène observée sur un large champ de vision du lidar (plusieurs dizaines de degrés). Chaque laser est agencé pour émettre une séquence d'impulsions prédéfinie, les séquences d'impulsions associées aux différents lasers étant distinctes les unes des autres. Les impulsions réfléchies par les différents points de la scène sont ensuite reçues et analysées par corrélation avec les différentes séquences prédéfinies.

### EXPOSÉ DE L'INVENTION

La présente invention a pour objet de remédier à ces inconvénients, en proposant un procédé d'émission et de réception d'impulsions laser pour une trajectographie laser ou une télémétrie laser d'un objet spatial selon la revendication 1 permettant d'augmenter la cadence de tir (et ainsi la probabilité de détection).

Avantageusement, l'étape d'analyse consiste à déduire, à partir de la suite d'impulsions identifiée, un temps dit temps de réception auquel est reçue la première impulsion de ladite suite d'impulsions identifiée, et à calculer la durée entre ledit temps d'émission et ledit temps de réception.

Ainsi, grâce à l'invention, on est en mesure de différencier, entre elles, les impulsions d'un ensemble formé d'une pluralité d'impulsions en définissant (temporellement) les durées entre, à chaque fois, deux impulsions successives pour les rendre uniques au sein de l'ensemble d'impulsions, conformément audit motif d'impulsions. On peut émettre, par conséquent, des ensembles (ou paquets) d'impulsions (sous forme d'un mode d'émission dit en « burst » ou en rafale), en sachant que l'on est en mesure d'identifier la réception de l'ensemble d'impulsions (renvoyées), et en particulier de déterminer le temps de réception auquel est reçue la première impulsion dudit ensemble d'impulsions (renvoyées).

Ceci permet notamment d'augmenter la probabilité de détection par l'augmentation des nombres d'impulsions, en utilisant donc un ensemble (ou paquet) d'impulsions au lieu d'une seule impulsion.

Le procédé d'émission et de réception d'impulsions laser permet ainsi, notamment, de réduire l'énergie de chaque impulsion laser émise (par exemple jusqu'à 10µJ), de la distribuer dans plusieurs impulsions laser (formant l'ensemble d'impulsions) et de signer temporellement ces impulsions laser (conformément au motif d'impulsions). Cela permet d'émettre à une cadence de tir plus élevée pour améliorer la probabilité de détection, tout en conservant une grande précision d'émission dans le cas notamment d'une télémétrie, et en maintenant une énergie moyenne basse, ce qui est favorable à la sécurité oculaire.

Dans un mode de réalisation préféré, l'étape d'analyse consiste à déterminer, à l'aide de ladite durée entre le temps d'émission et le temps de réception, une distance entre un poste comprenant l'unité d'émission/réception et un objet (ou cible) recevant les impulsions lasers émises et les renvoyant.

En variante ou en complément, de façon avantageuse, l'étape d'analyse consiste à analyser au moins un ensemble d'impulsions émis et la suite d'impulsions reçues correspondante, issue par exemple d'une modulation et d'une rétro-réflexion, pour en déduire des informations, par exemple dans le cadre d'une liaison laser de communication avec un drone ou un objet en orbite dans l'espace.

Par ailleurs, de façon avantageuse, l'étape d'analyse consiste à réaliser une corrélation entre ledit motif d'impulsions et les impulsions lumineuses reçues sur une fenêtre de corrélation pour identifier la suite d'impulsions lumineuses reçues, qui est conforme audit motif d'impulsions.

De préférence, l'étape d'émission consiste à émettre, successivement, une pluralité d'ensembles d'impulsions. Avantageusement, la durée entre deux ensembles d'impulsions émis successivement est supérieure à une durée de déplacement aller-retour d'un ensemble d'impulsions entre un poste comprenant l'unité d'émission/réception et un objet recevant les impulsions laser émises et les renvoyant.

La présente invention concerne également un système d'émission et de réception d'impulsions laser pour une trajectographie laser ou une télémétrie laser d'un objet spatial selon la revendication 8.

De façon avantageuse, ladite mémoire est configurée pour enregistrer également un temps dit temps d'émission, auquel est émise la première impulsion de la suite d'impulsions laser dudit ensemble d'impulsions émis par l'unité d'émission/réception.

En outre, avantageusement, l'unité de traitement de données est également configurée pour :
- déduire, à partir de la suite d'impulsions identifiée, un temps dit temps de réception auquel est reçue la première impulsion de ladite suite d'impulsions identifiée, et calculer la durée entre ledit temps d'émission et ledit temps de réception ; et/ou
- déterminer, à l'aide de ladite durée entre le temps d'émission et le temps de réception, une distance entre un poste comprenant l'unité d'émission/réception et un objet recevant les impulsions lasers émises et les renvoyant ; et/ou
- pour analyser au moins un ensemble d'impulsions émis et la suite d'impulsions reçues correspondante afin d'en déduire des informations.

Par ailleurs, de façon avantageuse, ledit système d'émission et de réception d'impulsions laser comporte également au moins une unité de filtrage configurée pour réaliser au moins un filtrage fréquentiel des impulsions lumineuses reçues, relativement à la ou aux fréquences des impulsions laser émises.

La présente invention concerne, en outre, un télémètre laser et/ou un système de communication, comportant un système d'émission et de réception d'impulsions laser, tel que celui décrit ci-dessus.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est le schéma synoptique d'un mode de réalisation particulier d'un système d'émission et de réception d'impulsions laser, conforme à l'invention ;
- la figure 2 est une vue schématique d'un motif d'impulsions à trois impulsions ;
- la figure 3 montre schématiquement deux graphiques superposés permettant d'expliquer le fonctionnement d'une unité d'émission/réception d'un système d'émission et de réception d'impulsions laser ;
- les figures 4 à 7 illustrent schématiquement différentes étapes successives d'une analyse par corrélation, en vue d'identifier une suite d'impulsions lumineuses reçues, qui est conforme à un motif d'impulsions à quatre impulsions ; et
- la figure 8 est le schéma synoptique d'un procédé d'émission et de réception d'impulsions laser.

### DESCRIPTION DETAILLEE

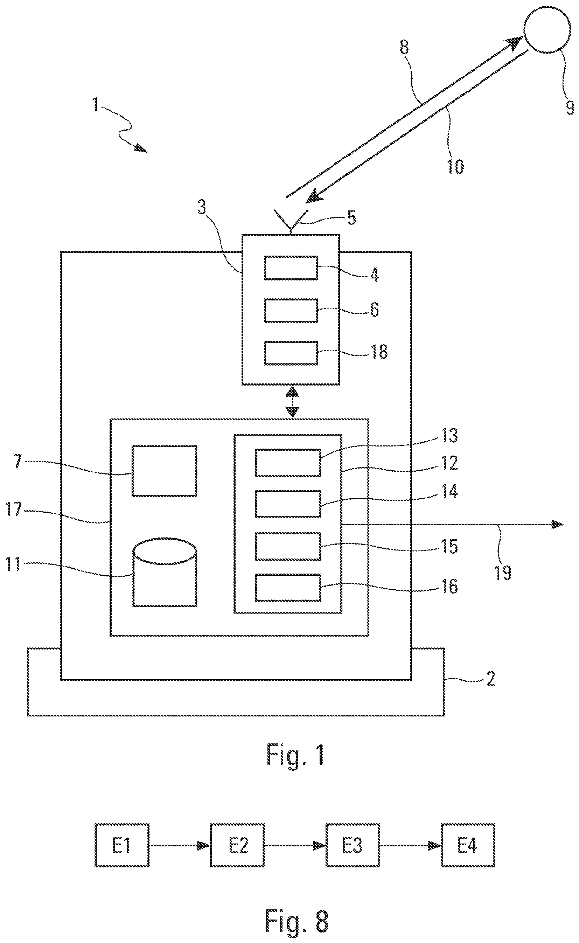

La figure 1 montre un système d'émission et de réception d'impulsions laser (ci-après « système 1 ») à haute fréquence, qui est représenté schématiquement dans un mode de réalisation particulier.

Ce système 1 qui est monté sur un poste 2, installé par exemple sur le sol, peut être utilisé dans de nombreuses applications, comme indiqué ci-dessus. Le système 1 peut également être monté sur un engin terrestre, maritime ou aérien (non représenté).

Le système 1 comporte une unité d'émission/réception 3. L'unité d'émission/réception 3 comprend, comme représenté sur la figure 1 :
- un module d'émission 4 configuré pour émettre des impulsions laser, via des optiques 5 (d'émission/réception), par exemple des impulsions laser d'une durée de l'ordre de 0,3 ns ; et
- un module de réception 6 configuré pour recevoir (ou détecter) des impulsions lumineuses, et notamment des impulsions laser, via les optiques 5 (d'émission/réception).

Selon l'invention, ledit système 1 comporte de plus, comme représenté sur la figure 1, une unité de génération 7 qui est configurée pour générer au moins deux motifs d'impulsions. L'unité de génération 7 comprend, par exemple, des moyens permettant à un opérateur d'entrée des caractéristiques du motif d'impulsions ou des moyens permettant de définir automatiquement ces caractéristiques.

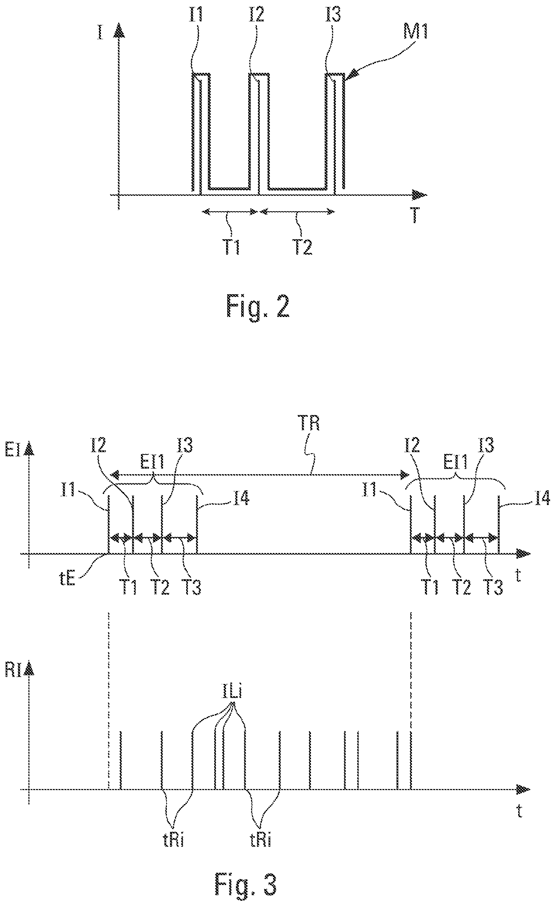

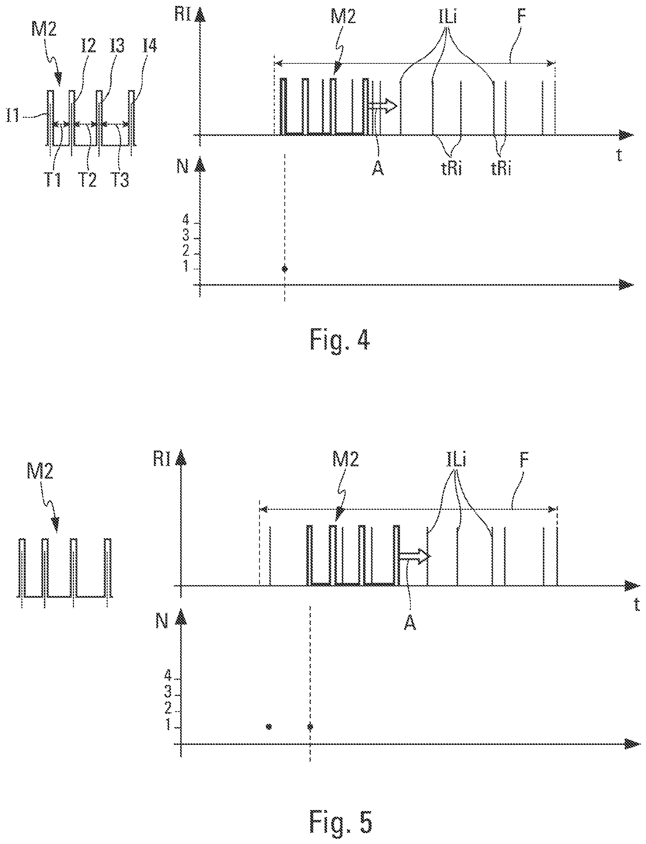

Dans le cadre de la présente invention, un motif d'impulsions comprend, comme représenté pour un motif d'impulsions M1 sur la figure 2, au moins trois impulsions successives I à savoir les impulsions 11, I2 et I3 sur l'exemple de la figure 2. Bien qu'il comporte de préférence trois impulsions 11, I2 et I3 notamment pour des raisons de simplicité et de rapidité de traitement, le motif d'impulsions utilisé par le système 1 peut également comporter plus de trois impulsions successives, par exemple quatre impulsions 11, I2, I3 et I4 comme le motif d'impulsions M2 des figures 4 à 7, ou plus de quatre impulsions.

Deux impulsions directement successives du motif d'impulsions sont à chaque fois séparées temporellement d'une durée de séparation associée, à savoir dans l'exemple de la figure 2 d'une durée de séparation T1 entre les impulsions I1 et I2 d'une durée de séparation T2 entre les impulsions I2 et I3, et dans l'exemple de la figure 4 de plus d'une durée de séparation T3 entre les impulsions I3 et I4.

Les différentes durées de séparation T1, T2 et T3 des motifs d'impulsions M1 et M2 sont variables, c'est-à-dire différentes l'une de l'autre, et conformes à un modèle (de durées de séparation) donné, c'est-à-dire que chaque durée de séparation est égale à une durée particulière. Le motif d'impulsions représente donc une signature (temporelle) des impulsions considérées.

Le module d'émission 4 de l'unité d'émission/réception 3 est configuré pour émettre au moins deux ensembles d'impulsions EI1 comprenant une suite d'impulsions laser, conforme au motif d'impulsions considéré, comme représenté sur la figure 3. A titre d'exemple, l'ensemble EI1 comporte la suite d'impulsions 11, I2, I3 et I4 (qui sont émises en étant séparées temporellement conformément au motif d'impulsions M2).

De plus, le module de réception 6 de l'unité d'émission/réception 3 est configuré pour recevoir des impulsions lumineuses ILi (figure 3). Parmi les impulsions reçues ILi, le module de réception 6 reçoit par exemple des impulsions correspondant à des bruits, et également les impulsions laser qui ont été :
- émises par le module d'émission 4, comme illustré par une flèche 8 sur la figure 1, par exemple sous forme de l'ensemble EI1 (représenté sur la figure 3) ; puis
- renvoyées par l'objet 9, par exemple une cible, comme illustré par une flèche 10 sur la figure 1, avant d'être détectées par le module de réception 6.

Cet objet 9 est de préférence un objet mobile dans le ciel, par exemple un drone ou un satellite (ou tout autre objet) en orbite. Cet objet 9 peut être situé à une distance élevée du poste 2, par exemple à quelques dizaines de kilomètres du poste 2.

Le système 1 comporte également, comme représenté sur la figure 1, au moins une mémoire 11 qui est configurée pour enregistrer :
- d'une part, le temps (ou moment) dit temps d'émission tE, auquel est émise au moins la première impulsion I1 de la suite d'impulsions laser dudit ensemble d'impulsions EI1 émis par le module d'émission 4, comme montré sur le graphique de la partie supérieure de la figure 3. Ce graphique illustre les émissions EI d'impulsions (réalisées par le module d'émission 4) en fonction du temps t. Dans l'exemple de la figure 3, les ensembles d'impulsions EI1 sont conformes au motif d'impulsions M2 des figures 4 à 7 ; et
- d'autre part, les temps (ou moments) dits temps de réception (ou de détection) tRi, auxquels les impulsions lumineuses ILi sont reçues (détectées) par le module de réception 6 de l'unité d'émission/réception 3, comme montré sur le graphique de la partie inférieure de la figure 3. Ce graphique illustre les réceptions RI d'impulsions lumineuses ILi en fonction du temps t.

Dans un mode de réalisation préféré, tel que représenté sur la figure 3, le module d'émission 4 est commandé de manière à émettre, successivement, une pluralité d'ensembles d'impulsions E11. Les émissions successives sont séparées, à chaque fois, d'une durée dite de tir (ou d'émission) TR, c'est-à-dire que les émissions des premières impulsions I1 de deux ensembles EI1 émis successivement sont séparées de ladite durée de tir TR.

Le système 1 comporte, en outre, une unité de traitement de données 12. L'unité de traitement de données 12 comprend, comme représenté sur la figure 1, un élément de traitement 13 qui est configuré pour analyser les durées entre les temps de réception tRi des différentes impulsions lumineuses ILi reçues par le module de réception 6, pour identifier une suite d'impulsions lumineuses reçues, qui est conforme au motif d'impulsions utilisé. Le motif d'impulsions utilisé par le module d'émission 4 est, par exemple, enregistré dans la mémoire 11. La suite d'impulsions identifiée par l'élément de traitement 13 est telle que les temps de réception tRi des impulsions lumineuses ILi de cette suite d'impulsions lumineuses sont séparés entre eux de durées de séparation qui sont identiques, à une marge près, aux durées de séparation T1 à T3 du motif d'impulsions utilisé, et ceci dans le même ordre d'apparition.

Pour ce faire, l'élément de traitement 13 est configuré pour réaliser une corrélation entre le motif d'impulsions M2 utilisé et les impulsions lumineuses ILi reçues, sur une fenêtre de corrélation F, pour identifier la suite d'impulsions lumineuses reçues, qui est conforme audit motif d'impulsions M2, comme représenté sur les figures 4 à 7.

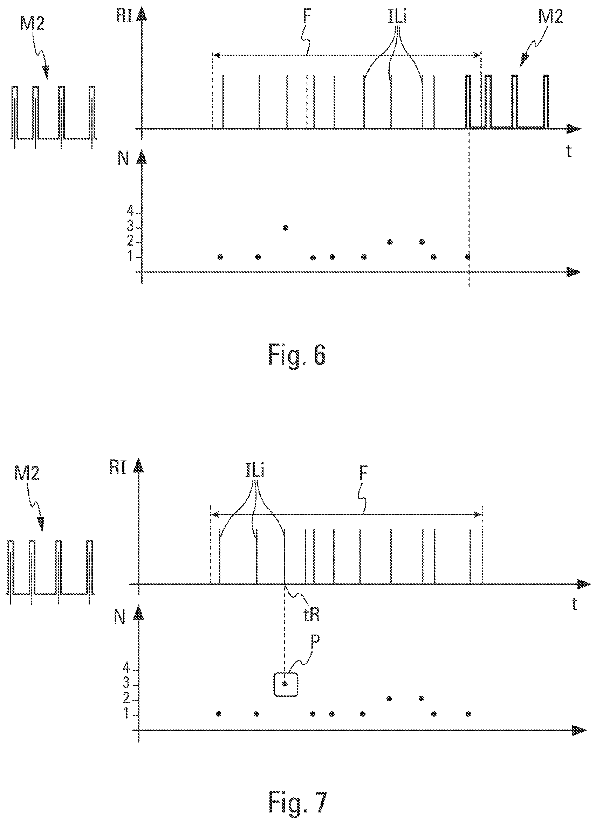

Pour mettre en oeuvre la corrélation, le motif d'impulsions M2 (à quatre impulsions dans cet exemple) est déplacé, comme illustré par une flèche A sur les figures 4 et 5, et pour chaque groupe successif de quatre impulsions ILi successives reçues, l'élément de traitement 13 vérifie si les durées entre ces quatre impulsions lumineuses ILi (qui sont obtenues à partir des temps de réception tRi correspondant) correspondent aux durées de séparation T1 à T3 du motif d'impulsions M2. Sur l'exemple des figures 4 à 7, on a indiqué sur un graphique prévu dans la partie inférieure de ces figures, le nombre N de correspondances obtenus pour chaque corrélation, c'est-à-dire pour chaque groupe successif de quatre impulsions. Dans l'exemple représenté sur ces figures, la corrélation permet d'identifier une suite d'impulsions dont la première impulsion est située à une position P sur la figure 7, la position P étant associée au nombre N le plus élevé de la corrélation.

Ainsi, le système 1 est en mesure de différencier, entre elles, les impulsions d'un ensemble EI1 d'une pluralité d'impulsions en définissant (temporellement) les durées entre, à chaque fois, deux impulsions successives (ou consécutives) pour les rendre uniques au sein de l'ensemble d'impulsions EI1, conformément au motif d'impulsions M1, M2 utilisé.

Par conséquent, le système 1 peut émettre des ensembles EI1 (ou paquets) d'impulsions (sous forme d'un mode d'émission dit en « burst » ou en rafale), en sachant qu'il sera en mesure d'identifier la réception de l'ensemble d'impulsions émis (et renvoyé), et en particulier de déterminer le temps de réception auquel est reçue la première impulsion dudit ensemble d'impulsions ainsi identifié.

Ceci permet notamment d'augmenter la probabilité de détection en augmentant le nombre d'impulsions émis, par l'utilisation d'un ensemble EI1 (ou paquet) d'impulsions au lieu d'une seule impulsion.

En outre, l'unité de traitement de données 12 comporte également, comme représenté sur la figure 1, un élément de traitement 14. Cet élément de traitement 14 est configuré :
- pour déduire, à partir de la suite d'impulsions identifiée, un temps (ou moment) dit temps de réception tR (figure 7), auquel est reçue la première impulsion de la suite d'impulsions identifiée ; et
- pour calculer la durée T0 entre le temps d'émission tE (auquel a été émise cette première impulsion) et ce temps de réception tR (avec T0 = tR - tE).

Cette durée T0 peut être utilisée pour en déduire diverses informations et notamment pour réaliser un calcul de distance. Pour ce faire, dans un mode de réalisation préféré, l'unité de traitement de données 12 comporte un élément de traitement 15. Cet élément de traitement 15 est configuré pour calculer, de façon usuelle, à l'aide de cette durée T0 entre le temps d'émission tE et le temps de réception tR (reçue de l'élément de traitement 14), en tenant compte de la vitesse c de la lumière, la distance D0 entre le poste 2 comprenant l'unité d'émission/réception 3 et l'objet 9 qui a reçu les impulsions lasers émises et les a renvoyées (figure 1), à partir de la relation D0 = c.T0/2. L'élément de traitement 15 met ainsi en oeuvre une fonction de télémétrie, en mesurant la distance entre le poste 2 et l'objet 9.

En variante ou en complément de l'élément de traitement 15, l'unité de traitement de données 12 comporte un élément de traitement 16. Cet élément de traitement 16 est configuré pour analyser au moins un ensemble d'impulsions EI1 émis et la suite d'impulsions (reçues) correspondante. Cette suite d'impulsions est issue, par exemple, d'une modulation et d'une rétro-réflexion réalisées sur l'objet 9. A partir de cette analyse, l'élément de traitement 16 est en mesure de déduire, de façon usuelle, diverses informations. Ce mode de réalisation particulier peut, par exemple, être utilisé dans le cadre d'une liaison laser de communication entre le poste 2 et l'objet 9, par exemple un drone ou un objet en orbite dans l'espace.

La durée de tir TR (entre deux ensembles d'impulsions EI1 émis successivement) est supérieure à une durée de déplacement aller-retour d'un ensemble d'impulsions laser entre le poste 2 comprenant l'unité d'émission/réception 3 et l'objet 9 recevant les impulsions laser émises et les renvoyant. A titre d'illustration, cette durée de déplacement aller-retour peut être comprise entre 1 et 5 millisecondes.

L'unité de traitement de données 12 peut transmettre les résultats de ses traitements, par exemple la distance calculée par l'élément de traitement 15 et/ou les informations déduites par l'élément de traitement 16, à un système utilisateur (non représenté) via une liaison 19.

Selon l'invention, l'unité de génération 7 est configurée pour générer au moins deux motifs d'impulsions différents, et le module d'émission 4 est configuré pour émettre une pluralité d'ensembles d'impulsions successives qui sont conformes à ces motifs d'impulsions différents, générés par l'unité de génération 7. Dans ce mode de réalisation particulier, les traitements réalisés par l'unité de traitement données 12 sont similaires à ceux précités, en tenant simplement compte de la différence entre les motifs d'impulsions utilisés.

Par ailleurs, dans un mode de réalisation particulier (représenté sur la figure 1), l'unité de génération 7, la mémoire 11 et l'unité de traitement de données 12 font partie d'une unité centrale 17 du système 1.

Le système 1 comporte également au moins une unité de filtrage 18 faisant partie, de préférence, de l'unité d'émission/réception 3. L'unité de filtrage 18 est configurée pour réaliser des filtrages, et au moins un filtrage fréquentiel des impulsions lumineuses détectées par le module de réception 6, pour conserver (en vue de leur traitement par l'unité de traitement de données 12) uniquement les impulsions lumineuses détectées qui présentent des fréquences situées dans des domaines définis autour de la ou des fréquences des impulsions laser émises par le module d'émission 4.

Le système 1 (d'émission et de réception d'impulsions laser), tel que décrit ci-dessus, est très avantageux. En particulier, il permet de réduire l'énergie de chaque impulsion laser (par exemple jusqu'à 10µJ), de distribuer l'énergie dans plusieurs impulsions laser (formant l'ensemble d'impulsions EI1) et de signer temporellement ces impulsions (conformément au motif d'impulsions considéré, par exemple M1 ou M2). Cela permet d'émettre à une cadence de tir TR plus élevée pour améliorer la probabilité de détection, tout en conservant la précision requise en cas de télémétrie, et en maintenant une énergie moyenne basse des impulsions laser émises, ce qui est avantageux en termes de sécurité oculaire.

En outre, on peut augmenter la résolution, en augmentant le nombre d'impulsions et/ou en diminuant la taille de la fenêtre de corrélation F.

Le système 1, tel que celui décrit ci-dessus, est susceptible de mettre en oeuvre un procédé d'émission et de réception d'impulsions laser à haute fréquence.

Ce procédé d'émission et de réception d'impulsions laser comporte, comme représenté sur la figure 8 (en lien avec la figure 1), les étapes suivantes :
- une étape de génération E1, mise en oeuvre par l'unité de génération 7, pour générer au moins deux motifs d'impulsions différents M1, M2, chacun desdits motifs d'impulsions différents comprenant au moins trois impulsions successives;
- une étape d'émission E2, mise en oeuvre par le module d'émission 4 de l'unité d'émission/réception 3, consistant à émettre une pluralité d'ensembles d'impulsions EI1 successifs qui sont conformes à des motifs d'impulsions différents, générés à l'étape de génération E1, au moins un desdits ensembles d'impulsions successifs comprenant une suite d'impulsions laser conforme à un desdits motifs d'impulsions différents, et à enregistrer (dans la mémoire 11) le temps (ou moment) dit temps d'émission tE, auquel est émise la première impulsion de chacun desdits ensembles d'impulsions successifs ;
- une étape de réception E3, mise en oeuvre par le module de réception 6 de l'unité d'émission/réception 3, consistant à recevoir des impulsions lumineuses ILi et à enregistrer les temps dits temps de réception tRi auxquels ces impulsions lumineuses ILi sont reçues ; et
- une étape d'analyse E4, mise en oeuvre par l'unité de traitement de données 12, consistant à analyser au moins les durées entre les temps de réception tRi des impulsions lumineuses ILi reçues par le module de réception 6, pour identifier une suite d'impulsions lumineuses reçues, qui est conforme à un desdits motifs d'impulsions différents M1, M2 utilisé lors de l'émission. Pour ce faire, l'étape d'analyse E4 réalise une corrélation, mise en oeuvre par l'élément de traitement 13, entre ledit motif d'impulsions M1, M2 et les impulsions lumineuses ILi reçues, sur une fenêtre de corrélation F, pour identifier une suite d'impulsions lumineuses reçues, qui est conforme audit motif d'impulsions M1, M2.

L'étape d'analyse E4 consiste également à déduire, à partir de la suite d'impulsions ainsi identifiée, un temps dit temps de réception tR auquel est reçue la première impulsion I1 de ladite suite d'impulsions identifiée, et à calculer la durée T0 entre ledit temps d'émission tE et ledit temps de réception tR.

Dans un mode de réalisation préféré, l'étape d'analyse E4 consiste à déterminer, à l'aide de la durée T0 (ainsi calculée) entre le temps d'émission tE et le temps de réception tR, une distance D0 entre le poste 2 comprenant l'unité d'émission/réception 3 et l'objet 9 ayant reçu les impulsions lasers émises et les ayant renvoyés.

En variante ou en complément, l'étape d'analyse E4 peut consister à analyser au moins un ensemble d'impulsions émis et la suite d'impulsions reçues correspondante, issue par exemple d'une modulation et d'une rétro-réflexion, pour en déduire des informations, par exemple dans le cadre d'une liaison laser de communication.

De nombreuses applications sont possibles pour un tel système 1 (d'émission et de réception d'impulsions laser), aussi bien des applications terrestres, maritimes et/ou aériennes (ou spatiales), avec notamment des transmissions à grandes distances (supérieures à dix kilomètres).

Selon une première application, le système 1, tel que décrit ci-dessus, fait partie d'un télémètre laser à haute fréquence (non représenté) qui peut être employé dans diverses utilisations dans le domaine spatial. Dans cette application, le télémètre utilise notamment la distance entre le poste 2 (de mesure) et l'objet 9, telle que déterminée par l'élément de traitement 15 de l'unité de traitement de données 12.

Un tel télémètre laser peut, en particulier, être utilisé pour mettre en oeuvre une trajectographie laser via une télémétrie laser sur satellite (de type SLR pour « Satellite Laser Ranging »), en particulier pour déterminer de façon très précise les orbites d'objets spatiaux (satellites, débris).

Par ailleurs, dans une autre application possible, le système 1 (d'émission et de réception d'impulsions laser) est utilisé pour réaliser une liaison laser (de communication) à haute fréquence entre la station 2, par exemple au sol, et un objet 9, par exemple un drone, en utilisant une technologie de rétro-réflecteurs modulés. Pour ce faire, le système 1 illumine un rétro-réflecteur monté sur l'objet 9. Ce rétro-réflecteur est conçu pour moduler l'intensité réfléchie. Il est réalisé, par exemple sous forme d'un coin de cube ou d'un réflecteur sphérique, de telle sorte que l'impulsion laser renvoyée soit réfléchie exactement dans la même direction que celle de l'impulsion laser reçue. La modulation est détectée et traitée par le système 1, par exemple à l'aide de l'élément de traitement 16, pour en déduire les informations correspondantes.

Le système 1 peut également être utilisé, dans une autre application, pour mettre en oeuvre le verrouillage actif de cibles à très longue distance.

## Revendications

1. Procédé d'émission et de réception d'impulsions laser pour une trajectographie laser ou une télémétrie laser d'un objet spatial, **caractérisé en ce qu'**il comporte au moins les étapes suivantes :
- une étape de génération (E1) d'au moins deux motifs d'impulsions différents (M1, M2), mise en oeuvre par une unité de génération (7), chacun desdits motifs d'impulsions différents (M1, M2) comprenant au moins trois impulsions successives (11, I2, I3, I4), deux impulsions successives de chacun desdits motifs d'impulsions différents (M1, M2) étant à chaque fois séparées temporellement d'une durée de séparation (T1, T2, T3) associée, les différentes durées de séparation (T1, T2, T3) de chacun desdits motifs d'impulsions différents (M1, M2) étant variables et conformes à un modèle donné ;
- une étape d'émission (E2), mise en oeuvre par une unité d'émission/réception (3), consistant à émettre une pluralité d'ensembles d'impulsions (EI1) successifs qui sont conformes à des motifs d'impulsions différents (M1, M2), générés à l'étape de génération (E1), au moins un desdits ensembles d'impulsions (EI1) successifs comprenant une suite d'impulsions laser conforme à un desdits motifs d'impulsions différents (M2) et à enregistrer au moins le temps dit temps d'émission (tE), auquel est émise la première impulsion (11) de la suite d'impulsions laser de chacun desdits ensembles d'impulsions successifs (EI1) ;
- une étape de réception (E3), mise en oeuvre par l'unité d'émission/réception (3), consistant à recevoir des impulsions lumineuses (ILi) et à enregistrer des temps dits temps de réception (tRi) auxquels ces impulsions lumineuses (ILi) sont reçues ; et
- une étape d'analyse (E4), mise en oeuvre par une unité de traitement de données (12), consistant au moins à analyser les durées entre les temps de réception (tRi) des impulsions lumineuses (ILi) reçues à l'étape de réception (E3) pour identifier une suite d'impulsions lumineuses reçues, qui est conforme à un desdits motifs d'impulsions différents (M1, M2).

2. Procédé selon la revendication 1, **caractérisé en ce que** l'étape d'analyse (E4) consiste à déduire, à partir de la suite d'impulsions identifiée, un temps dit temps de réception (tR) auquel est reçue la première impulsion (11) de ladite suite d'impulsions identifiée, et à calculer la durée entre ledit temps d'émission (tE) et ledit temps de réception (tR).

3. Procédé selon la revendication 2, **caractérisé en ce que** l'étape d'analyse (E4) consiste à déterminer, à l'aide de ladite durée entre le temps d'émission (tE) et le temps de réception (tR), une distance entre un poste (2) comprenant l'unité d'émission/réception (3) et un objet (9) recevant les impulsions laser émises et les renvoyant.

4. Procédé selon l'une quelconque des revendications précédentes, **caractérisé en ce que** l'étape d'analyse (E4) consiste à analyser au moins un ensemble d'impulsions émis et la suite d'impulsions reçues correspondante, pour en déduire des informations.

5. Procédé selon l'une quelconque des revendications précédentes, **caractérisé en ce que** l'étape d'analyse (E4) consiste à réaliser une corrélation entre chacun desdits motifs d'impulsions différents (M1, M2) et les impulsions lumineuses (ILi) reçues sur une fenêtre de corrélation (F), pour identifier la suite d'impulsions lumineuses reçues, qui est conforme à un desdits motifs d'impulsions différents (M1, M2).

6. Procédé selon l'une quelconque des revendications précédentes, **caractérisé en ce que** l'étape d'émission (E2) consiste à émettre, successivement, une pluralité d'ensembles d'impulsions (EI1).

7. Procédé selon la revendication 6, **caractérisé en ce que** la durée (TR) entre deux ensembles d'impulsions (EI1) émis successivement est supérieure à une durée de déplacement aller-retour d'un ensemble d'impulsions (EI1) entre un poste (2) comprenant l'unité d'émission/réception (3) et un objet (9) recevant les impulsions laser émises et les renvoyant.

8. Système d'émission et de réception d'impulsions laser pour une trajectographie laser ou une télémétrie laser d'un objet spatial, comportant une unité d'émission/réception, **caractérisé en ce qu'**il comporte :
- une unité de génération (7) configurée pour générer au moins deux motifs d'impulsions différents (M1, M2), chacun desdits motifs d'impulsions différents (M1, M2) comprenant au moins trois impulsions successives (11, I2, I3, I4), deux impulsions successives de chacun desdits motifs d'impulsions différents (M1, M2) étant à chaque fois séparées temporellement d'une durée de séparation (T1, T2, T3) associée, les différentes durées de séparation (T1, T2, T3) de chacun desdits motifs d'impulsions différents (M1, M2) étant variables et conformes à un modèle donné ;
- l'unité d'émission/réception (3) qui est configurée pour :
• émettre une pluralité d'ensembles d'impulsions (EI1) successifs qui sont conformes à des motifs d'impulsions différents (M1, M2), générés par l'unité de génération (7), au moins un ensemble desdits ensembles d'impulsions (EI1) successifs comprenant une suite d'impulsions laser conforme à un desdits motifs d'impulsions différents (M1, M2) ; et
• recevoir des impulsions lumineuses (ILi) ;
- au moins une mémoire (11) configurée pour enregistrer au moins les temps dits temps de réception (tRi), auxquels les impulsions lumineuses (ILi) sont reçues par l'unité d'émission/réception (3) ; et
- une unité de traitement de données (12) configurée au moins pour analyser les durées entre les temps de réception (tRi) des impulsions lumineuses (ILi) pour identifier une suite d'impulsions lumineuses reçues, qui est conforme à un desdits motifs d'impulsions différents (M1, M2).

9. Système selon la revendication 8, **caractérisé en ce qu'**il comporte au moins une unité de filtrage (18) configurée pour réaliser au moins un filtrage fréquentiel des impulsions lumineuses reçues, relativement à la ou aux fréquences des impulsions laser émises.

## Patentansprüche

1. Verfahren zum Aussenden und Empfangen von Laserimpulsen für eine Lasertrajektorie oder eine Laserentfernungsmessung eines Objekts im Weltraum, **dadurch gekennzeichnet, dass** es mindestens die folgenden Schritte umfasst:
- einen Schritt des Erzeugens (E1) von mindestens zwei verschiedenen Impulsmustern (M1, M2), der durch eine Erzeugungseinheit (7) durchgeführt wird, wobei jedes der verschiedenen Impulsmuster (M1, M2) mindestens drei aufeinanderfolgende Impulse (I1, 12, 13, 14) umfasst, wobei zwei aufeinanderfolgende Impulse jedes der verschiedenen Impulsmuster (M1, M2) jeweils durch eine zugeordnete Trennungsdauer (T1, T2, T3) temporell getrennt werden, wobei die verschiedenen Trennungsdauern (T1, T2, T3) jedes der verschiedenen Impulsmuster (M1, M2) variabel sind und einem gegebenen Modell entsprechen;
- einen Schritt des Aussendens (E2), der durch eine Sende-/Empfangseinheit (3) durchgeführt wird und darin besteht, eine Vielzahl von aufeinanderfolgenden Impulssätzen (EI1) auszusenden, die unterschiedlichen Impulsmustern (M1, M2) entsprechen, die im Schritt des Erzeugens (E1) erzeugt werden, wobei mindestens einer der aufeinanderfolgenden Impulssätze (EI1) eine Folge von Laserimpulsen, die einem der unterschiedlichen Impulsmuster (M2) entsprechen, umfasst, und mindestens den Zeitpunkt, Sendezeitpunkt (tE) genannt, aufzuzeichnen, zu dem der erste Impuls (I1) der Folge von Laserimpulsen jedes der aufeinanderfolgenden Impulssätze (EI1) gesendet wird;
- einen Schritt des Empfangens (E3), der durch die Sende-/Empfangseinheit (3) durchgeführt wird und darin besteht, Lichtimpulse (ILi) zu empfangen und die Zeitpunkte, Empfangszeitpunkte (tRi) genannt, aufzuzeichnen, zu denen diese Lichtimpulse (ILi) empfangen werden; und
- einen Schritt des Analysierens (E4), der durch eine Datenverarbeitungseinheit (12) durchgeführt wird und mindestens darin besteht, die Dauern zwischen den im Schritt des Empfangens (E3) empfangenen Empfangszeitpunkten (tRi) der Lichtimpulse (ILi) zu analysieren, um eine Folge von empfangenen Lichtimpulsen zu identifizieren, die einem der verschiedenen Impulsmuster (M1, M2) entspricht.

2. Verfahren nach Anspruch 1, **dadurch gekennzeichnet, dass** der Schritt des Analysierens (E4) darin besteht, aus der identifizierten Folge von Impulsen einen Zeitpunkt, Empfangszeitpunkt (tR) genannt, abzuleiten, zu dem der erste Impuls (I1) der identifizierten Folge von Impulsen empfangen wird, und die Dauer zwischen dem Sendezeitpunkt (tE) und dem Empfangszeitpunkt (tR) zu berechnen.

3. Verfahren nach Anspruch 2, **dadurch gekennzeichnet, dass** der Schritt des Analysierens (E4) darin besteht, anhand der Dauer zwischen dem Sendezeitpunkt (tE) und dem Empfangszeitpunkt (tR) eine Entfernung zwischen einer Station (2), die die Sende-/Empfangseinheit (3) umfasst, und einem Objekt (9), das die ausgesendeten Laserimpulse empfängt und zurücksendet, zu bestimmen.

4. Verfahren nach einem der vorhergehenden Ansprüche, **dadurch gekennzeichnet, dass** der Schritt des Analysierens (E4) darin besteht, mindestens einen Satz ausgesendeter Impulse und die entsprechende Folge empfangener Impulse zu analysieren, um daraus Informationen abzuleiten.

5. Verfahren nach einem der vorhergehenden Ansprüche, **dadurch gekennzeichnet, dass** der Schritt des Analysierens (E4) darin besteht, eine Korrelation zwischen jedem der verschiedenen Impulsmuster (M1, M2) und den in einem Korrelationsfenster (F) empfangenen Lichtimpulsen (ILi) herzustellen, um die Folge der empfangenen Lichtimpulse zu identifizieren, die einem der verschiedenen Impulsmuster (M1, M2) entspricht.

6. Verfahren nach einem der vorhergehenden Ansprüche, **dadurch gekennzeichnet, dass** der Schritt des Aussendens (E2) darin besteht, eine Vielzahl von Impulssätzen (EI1) aufeinanderfolgend auszusenden.

7. Verfahren nach Anspruch 6, **dadurch gekennzeichnet, dass** die Dauer (TR) zwischen zwei aufeinanderfolgend ausgesendeten Impulssätzen (EI1) größer ist als eine Dauer der Hin- und Rückbewegung eines Impulssatzes (EI1) zwischen einer Station (2), die die Sende-/Empfangseinheit (3) umfasst, und einem Objekt (9), das die ausgesendeten Laserimpulse empfängt und zurücksendet.

8. System zum Aussenden und Empfangen von Laserimpulsen für eine Lasertrajektorie oder eine Laserentfernungsmessung eines Objekts im Weltraum, umfassend eine Sende-/Empfangseinheit, **dadurch gekennzeichnet, dass** es Folgendes umfasst:
- eine Erzeugungseinheit (7), die dazu konfiguriert ist, mindestens zwei verschiedene Impulsmuster (M1, M2) zu erzeugen, wobei jedes der verschiedenen Impulsmuster (M1, M2) mindestens drei aufeinanderfolgende Impulse (I1, 12, 13, 14) umfasst, wobei zwei aufeinanderfolgende Impulse jedes der verschiedenen Impulsmuster (M1, M2) jeweils durch eine zugeordnete Trennungsdauer (T1, T2, T3) temporell getrennt werden, wobei die verschiedenen Trennungsdauern (T1, T2, T3) jedes der verschiedenen Impulsmuster (M1, M2) variabel sind und einem gegebenen Modell entsprechen;
- eine Sende-/Empfangseinheit (3), die konfiguriert ist für:
• Aussenden einer Vielzahl von aufeinanderfolgenden Impulssätzen (EI1), die verschiedenen Impulsmustern (M1, M2) entsprechen, die von der Erzeugungseinheit (7) erzeugt werden, wobei mindestens ein Satz der aufeinanderfolgenden Impulssätze (EI1) eine Folge von Laserimpulsen umfasst, die einem der verschiedenen Impulsmuster (M1, M2) entspricht; und
• Empfangen von Lichtimpulsen (ILi);
- mindestens einen Speicher (11), der dazu konfiguriert ist, mindestens die Zeitpunkte, Empfangszeitpunkte (tRi) genannt, aufzuzeichnen, zu denen die Lichtimpulse (ILi) von der Sende-/Empfangseinheit (3) empfangen werden; und
- eine Datenverarbeitungseinheit (12), die zumindest dazu konfiguriert ist, die Zeiträume zwischen den Empfangszeitpunkten (tRi) der Lichtimpulse (ILi) zu analysieren, um eine Folge von empfangenen Lichtimpulsen zu identifizieren, die einem der verschiedenen Impulsmustern (M1, M2) entspricht.

9. System nach Anspruch 8, **dadurch gekennzeichnet**, das es ferner mindestens eine Filtereinheit (18) umfasst, die dazu konfiguriert ist, mindestens eine Frequenzfilterung der empfangenen Lichtimpulse in Bezug auf die Frequenz oder Frequenzen der ausgesendeten Laserimpulse durchzuführen.

## Claims

1. A method for emitting and receiving laser pulses for a laser tracking or a laser ranging of a space object, **characterised in that** it includes at least the following steps:
- a step (E1) of generating at least two different pulse patterns (M1, M2), implemented by a generation unit (7), each of said different pulse patterns (M1, M2) comprising at least three successive pulses (I1, I2, I3, I4), two successive pulses of each of said different pulse patterns (M1, M2) being, each time, temporally separated by an associated separation duration (T1, T2, T3), the different separation durations (T1, T2, T3) of each of said different pulse patterns (M1, M2) being variable and conforming to a given pattern;
- an emission step (E2), implemented by an emission/reception unit (3), of emitting a plurality of successive sets of pulses (E11) which conform to different pulse patterns (M1, M2), generated in the generation step (E1), at least one of said successive sets of pulses (E11) comprising a sequence of laser pulses conforming to one of said different pulse patterns (M2) and in recording at least the time called emission time (tE), at which the first pulse (11) of the sequence of laser pulses of each of said successive sets of pulses (E11) is emitted;
- a reception step (E3), implemented by the emission/reception unit (3), of receiving light pulses (ILi) and in recording times called reception times (tRi) at which these light pulses (ILi) are received; and
- an analysis step (E4), implemented by a data processing unit (12), consisting at least in analyzing the durations between the reception times (tRi) of the light pulses (ILi) received at the reception step (E3) to identify a sequence of received light pulses, which conforms to one of said different pulse patterns (M1, M2).

2. The method according to claim 1, **characterised in that** the analysis step (E4) consists in deducing, from the identified sequence of pulses, a time called reception time (tR) at which the first pulse (11) of said identified sequence of pulses is received, and in calculating the duration between said emission time (tE) and said reception time (tR).

3. The method according to claim 2, **characterised in that** the analysis step (E4) consists in determining, using said duration between the emission time (tE) and the reception time (tR), a distance between a station (2) comprising the emission/reception unit (3) and an object (9) receiving the emitted laser pulses and returning them.

4. The method according to any one of the preceding claims, **characterised in that** the analysis step (E4) consists in analysing at least one set of emitted pulses and the corresponding series of received pulses, in order to deduce information therefrom.

5. The method according to any one of the preceding claims, **characterised in that** the analysis step (E4) consists in carrying out a correlation between each of said different pulse patterns (M1, M2) and the light pulses (ILi) received on a correlation window (F), to identify the sequence of received light pulses, which conforms to one of said different pulse patterns (M1, M2).

6. The method according to any one of the preceding claims, **characterised in that** the emission step (E2) consists in, successively, emitting a plurality of sets of pulses (EI1).

7. The method according to claim 6, **characterised in that** the duration (TR) between two successively emitted sets of pulses (EI1) is greater than a return trip duration of a set of pulses (E11) between a station (2) comprising the emission/reception unit (3) and an object (9) receiving the emitted laser pulses and returning them.

8. A system for emitting and receiving laser pulses for a laser tracking or a laser ranging of a space object, including an emission/reception unit, **characterised in that** it includes:
- a generation unit (7) configured to generate at least two different pulse patterns (M1, M2), each of said different pulse patterns (M1, M2) comprising at least three successive pulses (I1, 12, 13, 14), two successive pulses of each of said different pulse patterns (M1, M2) being, each time, temporally separated by an associated separation duration (T1, T2, T3), the different separation durations (T1, T2, T3) of each of said different pulse patterns (M1, M2) being variable and conforming to a given pattern;
- the emission/reception unit (3) which is configured to:
• emit a plurality of successive sets of pulses (E11) which conform to different pulse patterns (M1, M2), generated by the generation unit (7), at least one set of said successive sets of pulses (E11) comprising a succession of laser pulses conforming to one of said different pulse patterns (M1, M2); and
• receive light pulses (ILi);
- at least one memory (11) configured to record at least the times called reception times (tRi), at which the light pulses (ILi) are received by the emission/reception unit (3); and
- a data processing unit (12) configured at least to analyse the durations between the reception times (tRi) of the light pulses (ILi) to identify a sequence of received light pulses, which conforms to one of said different pulse patterns (M1, M2).

9. The system according to claim 8, **characterised in that** it includes at least one filtering unit (18) configured to carry out at least one frequency filtering of the received light pulses, relative to the frequency or frequencies of the emitted laser pulses.
